# EUROPÄISCHE PATENTSCHRIFT

(11) **EP 0 276 264 B1**
(45) Veröffentlichungstag und Bekanntmachung des Hinweises auf die Patenterteilung: **17.03.1993**
(21) Anmeldenummer: 87904840.3
(22) Anmeldetag: 01.08.1987
(51) Int. Cl.: B23H 9/08

(54) **VERFAHREN ZUM ELEKTROCHEMISCHEN BEARBEITEN VON WERKSTÜCKEN SOWIE VORRICHTUNG ZUR DURCHFÜHRUNG DES VERFAHRENS**
PROCESS AND DEVICE FOR ELECTROCHEMICALLY MACHINING WORKPIECES
PROCEDE ET DISPOSITIF D'USINAGE ELECTROCHIMIQUE DE PIECES

(30) Priorität: 08.08.1986 DE 3626966
(43) Veröffentlichungstag der Anmeldung: 03.08.1988
(73) Patentinhaber: JORDAN, Ulrich, D-50667 Köln (DE)
(72) Erfinder: JORDAN, Ulrich, D-50667 Köln (DE)
(74) Vertreter: Döring, Wolfgang, Dr.-Ing. Patentanwälte Hauck, Graalfs, Wehnert, Döring, Siemons
(86) Internationale Anmeldenummer: DE8700338
(87) Internationale Veröffentlichungsnummer: WO8800871

(56) Entgegenhaltungen:
- DE-A- 1 521 090
- DE-A- 3 043 452
- US-A- 2 939 825
- US-A- 3 346 477
- US-A- 3 740 324

## Beschreibung

Die vorliegende Erfindung betrifft ein Verfahren mit den Merkmalen des Oberbegriffs des Patentanspruchs 1 sowie eine Vorrichtung zur Durchführung des Verfahrens mit den Merkmalen des Oberbegriffs der Patentansprüche 10 und 15

Aus der US-A 2 939 825 ist ein Verfahren zum elektrochemischen Bearbeiten von Werkstücken bekannt, bei dem Elektrolyt über eine Leitung und eine Sperre auf eine als Kathode dienende rotierende Scheibe abgegeben wird. Die Sperre sorgt dafür, daß sich auf der Scheibe ein Elektrolytfilm bildet. Das zu behandelnde Werkstück wird dann in den Elektrolytfilm auf der Scheibe eingetaucht. Bei diesem bekannten Verfahren wird daher ähnlich wie bei einem Tauchverfahren das Werkstück in einen bestehenden Elektrolytfilm eingeführt bzw. eingetaucht.

Aus der DE-Al 521 090 ist ein Verfahren zum elektrochemischen Bearbeiten von Werkstücken bekannt, bei dem ein Werkstück in Form eines Bandes kontinuierlich durch eine mit Elektrolyt gefüllte Kammer gezogen wird.

Beide Veröffentlichungen beinhalten daher im wesentlichen die Lehre, Werkstücke durch Tauchen in Elektrolytbäder bzw. Elektrolytfilme zu bearbeiten.

Aus der DE-A3 043 452 sind ein Verfahren sowie eine Vorrichtung zum Elektroschärfen von Schneidwerkzeugen zu entnehmen. Hierbei wird bei dem bekannten Verfahren auf die zu schärfende Kante des Werkzeuges einseitig eine den elektrischen Strom nicht leitende Schutzschicht aufgetragen und dann die Kante in eine elektrolytische Lösung eingetaucht, wobei diese in einem Behälter angeordnet ist. Anschließend wird eine Gleichspannungsquelle mit dem als Anode geschalteten Werkzeug und einer in die elektrolytische Lösung eintauchenden Kathode derart verbunden, daß die nicht abgedeckte Seite der Kante gleichzeitig über ihre gesamte Fläche durch elektrolytisches Abtragen geschärft wird. Durch Variation der an der zu schärfenden Kante anliegenden Stromdichte in einem Bereich zwischen etwa 0,1 A/cm² und 1 A/cm² kann die Menge der von der nicht abgedeckten Kante abgetragenen Ionen und damit das Ausmaß des Schärfens verändert werden, wobei eine Ausführungsform des bekannten Verfahrens vorsieht, daß zunächst bei einer relativ hohen Stromdichte die Kante ganzflächig relativ grob vor- und anschließend bei einer relativ niedrigen Stromdichte die Kante fein nachgeschliffen wird.

Ein derartiges Verfahren bzw. eine derartige Vorrichtung weist den Nachteil auf, daß es bzw. sie mit Elektrolytlösung gefüllte Behältnisse benötigt, deren Größen auf die jeweiligen Abmessungen der zu bearbeitenden Werkzeuge angepaßt werden müssen. Wegen der relativ geringen Stromdichte dauert ein derartiges Elektroschärfen relativ lange, so daß die Anwendung des bekannten Verfahrens bzw. der Vorrichtung mit einem nicht unerheblichen Aufwand verbunden ist.

Der Erfindung liegt die Aufgabe zugrunde, ein Verfahren bzw. eine Vorrichtung der angegebenen Art zur Verfügung zu stellen, das bzw. die unter besonderer Berücksichtigung von kurzen Bearbeitungszeiten besonders vielfältige Anwendungsmöglichkeiten zur elektrochemischen Bearbeitungen von Werkstücken bieten.

Diese Aufgabe wird erfindungsgemäß durch ein Verfahren mit den kennzeichnenden Merkmalen des Patentanspruchs 1 sowie durch eine Vorrichtung mit den kennzeichnenden Merkmalen des patentansprüche 10 oder 15 gelöst.

Das erfindungsgemäße Verfahren beruht auf dem Grundgedanken, die bei dem vorstehend aufgeführten Stand der Technik erforderliche, in einem Behältnis angeordnete Elektrolytlösung, in die das als Elektrode geschaltete Werkstück und eine Gegenelektrode eintauchen, durch einen Strom von Elektrolyt zu ersetzen, der von einer Gegenelektrode auf das als Elektrode geschaltete und zu bearbeitende Werkstück derart gerichtet ist, daß er punktuell, linienförmig oder flächig auf die zu bearbeitende Kante bzw. Fläche des Werkstückes auftrifft. Beim Verbinden der Gegenelektrode und des Werkstückes mit einer Spannungsquelle fließt hierzwischen ein Strom, der eine entsprechende punktuelle bzw. linienförmige elektrochemische Bearbeitung des Werkstückes bewirkt. Durch Bewegen des Werkstückes relativ zur Elektrode oder der Elektrode relativ zum Werkstück erfolgt eine linienförmige bzw. flächige Bearbeitung des Werkstückes.

Das erfindungsgemäße Verfahren weist eine Reihe von Vorteilen auf. So ermöglicht es aufgrund der punktuellen bzw. linienförmigen Kontaktflächen des Elektrolytstromes mit der Kante bzw. Fläche des Werkstückes hohe Stromdichten, die beispielsweise in einem Bereich bis etwa 250 A/cm² liegen, ohne daß hierfür eine aufwendige Stromversorgung, d. h. eine hohe Stromstärke, erforderlich ist. Dies wiederum bewirkt, daß im Vergleich zu dem vorstehend aufgeführten Stand der Technik die elektrochemische Bearbeitung der Werkstücke wesentlich schneller durchgeführt werden kann. Darüberhinaus bewirkt das erfindungsgemäße Verfahren noch eine Veränderung der Kristallinität der behandelten Kante bzw. Fläche, woraus für den Anwendungsfall des Elektroschärfens eine wesentlich schärfere und auch widerstandsfähigere Schneidkante resultiert. Auch läßt sich das erfindungsgemäße Verfahren wesentlich besser handhaben, da hierbei nicht, wie beim vorstehend aufgeführten Stand der Technik, großvolumige Behältnisse für die Elektrolytlösung erforderlich sind und somit ein Austausch des Elektrolyts, der bei unterschiedlichen Anwendungsfällen notwendig wird, wesentlich schneller und einfacher durchführbar ist. Aus dem gleichen Grund ist das erfindungsgemäße Verfahren im Vergleich zu dem bekannten Verfahren auch wesentlich wirtschaftlicher zu betreiben, was insbesondere auf solche Anwendungsfälle zutrifft, bei denen relativ teure Elektrolyte, wie beispielsweise Edelmetalle, zur Anwendung gelangen.

Bei einer weiteren Ausführungsform des erfindungsgemässen Verfahrens wird die Elektrode mit einem konstanten Abstand zu der zu bearbeitenden Fläche bzw. Kante des Werkstückes bewegt. Hierdurch wird sichergestellt, daß die Kante bzw. Fläche des Werkstückes stets gleichmässig behandelt wird und somit, beispielsweise bei der anodischen Oxidation oder beim galvanischen Abscheiden, stets eine gleichmäßig dicke Oxidations- bzw. Überzugsschicht erzielt oder beispielsweise beim elektrolytischen Entfetten, Ätzen sowie Gravieren eine gleichmäßig dicke Schicht von der bearbeiteten Kante bzw. Fläche des Werkstückes elektrochemisch abgetragen wird.

Sollen bei dem erfindungsgemäßen Verfahren auf bestimmte Kanten- bzw. Flächenbereiche der Werkstücke unterschiedlich dicke Schichten punktuell, linienförmig oder ganzflächig aufgebracht oder von diesen abgetragen werden, so kann der Abstand zwischen der Elektrode und dem Werkstoff, während diese relativ zueinander mit einer konstanten Geschwindigkeit bewegt werden, verändert werden. Auch besteht die Möglichkeit, den Abstand zwischen beiden konstant zu halten und stattdessen die Elektrode relativ zum Werkstoff oder umgekehrt derart zu bewegen, daß in den Bereichen, in denen eine unterschiedlich dicke Schicht elektrochemisch aufgebracht bzw. abgetragen werden soll, die Geschwindigkeit variiert wird. So führt eine Erhöhung der Geschwindigkeit in den ausgewählten Bereichen zu einer Verringerung der erzielten Schichtdicke, während eine Geschwindigkeitsverringerung eine Vergrößerung derselben bewirkt. Gleiches gilt natürlich auch für solche elektrochemischen Bearbeitungsprozesse, bei denen die Oberfläche der zu bearbeitenden Kante bzw. Fläche des Werkstückes in ihrer chemischen Zusammensetzung verändert wird, was beispielsweise auf den Fall der anodischen Oxidation zutrifft. Mit einer derartigen Verfahrensweise lassen sich somit gezielt bestimmte Bereiche der Kante bzw. Fläche im Vergleich zu hierzu benachbarten Bereichen punktuell, linienförmig oder ganzflächig verändern.

Zur elektrochemischen Bearbeitung der Werkstücke werden beim erfindungsgemäßen Verfahren wahlweise Wechsel-, Gleich- oder Impulsstrom sowie Kombinationen dieser Stromarten verwendet. Besonders gute Ergebnisse sind dadurch zu erreichen, daß man abwechselnd für eine bestimmte Zeit eine hohe Stromdichte und danach eine niedrige Stromdichte an der Elektrode anlegt, wobei die niedrige Stromdichte etwa 5 - 20 % der hohen Stromdichte entspricht. Hierdurch wird beispielsweise beim Elektroschärfen erreicht, daß durch die hohe Stromdichte zunächst eine relativ große Schicht von der zu schärfenden Kante abgetragen und hierdurch größere Unebenheiten in der Kante ausgeglichen werden, während durch die niedrige Stromdichte eine derart vorgeschärfte Kante nachgearbeitet bzw. zusätzlich geglättet und feingeschliffen wird. Die Periodenzeit bei einem derartigen stufenweise Arbeiten liegt zwischen 100 Minuten und 0,1 Mikrosekunden und hängt von dem jeweiligen Anwendungsgebiet sowie der verwendeten Stromdichte, dem Abstand und der Geschwindigkeit ab, mit der die Elektrode und das Werkzeug relativ zueinander bewegt werden.

Auch ist es möglich, bei dem erfindungsgemäßen Verfahren anstelle der vorstehend aufgeführten Zweistufentechnik eine Drei- oder Mehrstufentechnik anzuwenden, wobei beispielsweise beim galvanischen Abscheiden eines Stoffes auf dem Werkstück in zwei Stufen ein Auftragen des Stoffes erfolgt und durch Umpolen in einer dritten Stufe eine relativ kleine Schicht des abgeschiedenen Stoffes wieder abgetragen wird. Hierdurch erreicht man qualitativ hochwertige Oberflächen, die sich beispielsweise durch eine besondere Glätte, Härte oder Gleichmäßigkeit auszeichnen. Ebenso ist es möglich, in einer ersten Stufe einen Wechselstrom zwischen der Elektrode und dem Werkstück und in einer zweiten Stufe einen Gleichstrom zwischen beiden fließen zu lassen, und eine derartige stufenweise ablaufende elektrochemische Bearbeitung periodisch oder abwechselnd zu wiederholen.

Vorzugsweise wird bei dem erfindungsgemäßen Verfahren mit einer Elektrolytflüssigkeit gearbeitet, die mittels einer Pumpe zugeführt wird. Ebenso ist es möglich, anstelle der Pumpe die Elektrolytflüssigkeit derart oberhalb der Elektrode anzuordnen, daß sie aufgrund der Schwerkraft der Elektrode zugeführt wird. Selbstverständlich können auch Elektrolytschmelzen anstelle der Elektrolytflüssigkeit eingesetzt werden.

Das erfindungsgemäße Verfahren ist auf alle bekannten elektrochemischen Bearbeitungsverfahren, wie beispielsweise Galvanisieren, Elektroschärfen, anodisches Oxidieren, Ätzen, Entfetten etc., anwendbar. Besonders gute Ergebnisse lassen sich durch das erfindungsgemäße Verfahren bei der galvanischen Abscheidung von in einer Elektrolytflüssigkeit dispergierten Feststoffen erzielen, wobei derartige mit einer solchen Schicht versehenen Werkstücke beispielsweise als Feilen, sonstige Schleif- und Polierwerkzeuge, insbesondere im medizinischen und zahntechnischen Bereich, verwendet werden. Auch können durch das erfindungsgemäße Verfahren besonders haltbare und an ihrer Oberfläche mit einer gleichmäßigen oder wahlweise graduell unterschiedlichen Schleifstoffschicht versehene Nagelfeilen hergestellt werden. Wegen der punktuell und linienförmigen sowie gezielt abgegrenzten flächigen elektrochemischen Bearbeitung ist das erfindungsgemäße Verfahren ferner besonders gut zur Ätzung von gedruckten Leiterplatten einzusetzen, da hierbei wegen der einstellbaren, auf die jeweilige gedruckte Schaltung anpaßbaren Kontaktfläche nur ein geringer Unterätzungsgrad resultiert.

Die erfindungsgemäße Vorrichtung zur Durchführung des Verfahrens weist eine Elektrode sowie eine damit verbundene elektrische Schaltung und eine Spannungsquelle auf. Hierbei ist die Spannungsquelle derart mit dem zu bearbeitenden Werkstück verbunden, daß bei Anordnung des Elektrolyts zwischen der Elektrode und der zu bearbeitenden Fläche bzw. Kante des Werkstückes ein Strom fließt. Die Elektrode ist als Spaltelektrode ausgebildet und umfaßt eine Zuführeinrichtung für den Elektrolyt von einem ersten, elektrisch leitenden und mit der Spannungsquelle verbundenen Elektrodenabschnitt zu einem Spalt, der in einem den ersten Elektrodenabschnitt mindestens teilweise umhüllenden zweiten Elektrodenabschnitt aus einem nicht leitenden Material in einem Bereich angeordnet ist, der auf das Werkstück ausrichtbar ist. Ferner besitzt die Vorrichtung eine dem Werkstück oder der Elektrode zugeordnete Fördereinrichtung, mittels der das Werkstück relativ zur Elektrode oder umgekehrt bewegbar ist.

Die elektrische Schaltung weist einen ersten und einen zweiten Festspannungsregelkreis auf, denen jeweils eine Strombegrenzungsschaltung zugeordnet ist. Hierdurch wird erreicht, daß wahlweise eine erste und zweite, einstellbare Spannung an der Elektrode und dem Werkstück anlegbar ist. Vorzugsweise ist der erste Festspannungsregelkreis derart ausgelegt, daß er Spannungen bis zu 100 V, insbesondere Spannungen bis 35 V, und der zweite Festspannungsregelkreis Spannungen bis zu 15 V ermöglicht. Zusätzlich ist der elektrischen Schaltung ein Zeitschaltungskreis zugeordnet, mittels dem wahlweise über entsprechende Schaltelemente einer der Festspannungsregelkreise für eine vorgegebene Zeit periodisch mit der Spaltelektrode und dem Werkstück verbunden wird. Hierdurch wird ermöglicht, daß zwischen der Elektrode und dem Werkstück ein Gleichstrom, der über die Bearbeitungszeit gesehen auch in der Stromstärke stufenweise veränderbar ist, ein Wechselstrom, ein Wechselstrom nach vorheriger Einweggleichrichtung oder nach vorheriger Doppelweggleichrichtung, wobei der Wechselstrom eine Frequenz von 50 Hz und wahlweise stufenweise eine unterschiedliche Stromstärke aufweisen kann, sowie ein Impulsstrom fließt, der wahlweise eine unterschiedliche Stromstärke einschließlich Umpolung besitzt, wobei sich diese innerhalb einer einstellbaren Periodendauer wiederholen.

Die Spaltelektrode besitet einen halbkugelförmigen Endabschnitt. Hierbei ist der Spalt zur Mitte des halbkugelförmigen Endabschnittes ausgerichtet und weist eine Spaltbreite zwischen etwa 20 - 50 µm und eine Spalthöhe zwischen etwa 0,5 mm - 1 mm auf. Bedingt durch die spezielle Gestaltung des Elektrodenabschnitts und der Anordnung des Spaltes lassen sich bei einer derartigen Spaltelektrode trotz Anwendung von relativ niedrigen Strömen hohe Stromdichten erzielen.

Abhängig von dem jeweiligen Anwendungsfall ist die Zuführeinrichtung für den Elektrolyt als Pumpe, die vorzugsweise in ihrem Durchsatz regelbar ist, ausgebildet oder besteht lediglich aus einem Vorratsbehältnis für den Elektrolyt, das oberhalb der Elektrode derart angeordnet ist, daß mittels Schwerkraft der Elektrolyt der Spaltelektrode zugeführt wird.

Auch die Ausgestaltung der Fördereinrichtung für die Spaltelektrode richtet sich nach dem jeweiligen Anwendungsgebiet. So empfiehlt es sich in der Regel, die Fördereinrichtung der Elektrode und nicht dem Werkstück zuzuordnen, da insbesondere bei größeren Werkstücken dies einfacher durchführbar ist. Im einfachsten Fall ist die Elektrode lediglich parallel zum Werkstück mit einer konstanten oder variablen Geschwindigkeit bewegbar, was beispielsweise dadurch erreicht wird, daß die Fördereinrichtung einen ersten Abschnitt zur Halterung des Werkstückes und einen hierzu parallel verschiebbaren zweiten Abschnitt zur Halterung der Elektrode aufweist. Durch eine verschwenkbare Lagerung des zweiten Abschnitts relativ zum ersten Abschnitt kann zusätzlich erreicht werden, daß der Abstand zwischen der Elektrode und dem Werkstück veränderbar ist. Auch ist es möglich, dem zweiten Abschnitt eine Steuervorrichtung zuzuordnen, die den zweiten Abschnitt nach einem vorgegebenen Muster derart bewegt, daß dieses Muster punktuell, linienförmig oder flächig auf das Werkstück übertragen wird. Eine derartige Ausführungsform ist insbesondere zum Signieren, Gravieren oder für solche Anwendungsfälle geeignet, bei denen bestimmte Bereiche der Oberfläche der zu bearbeitenden Kante bzw. Fläche des Werkstückes unterschiedlich bezüglich der Dicke des abgeschiedenen oder abgetragenen Materials oder der durch die Bearbeitung hervorgerufenen chemischen Veränderung der Oberflächenschicht bearbeitet werden sollen.

Eine weitere Ausführungsform der erfindungsgemäßen Vorrichtung, die insbesondere zur Bearbeitung von großen Flächen / Kanten der Werkstücke geeignet ist, weist mehrere Spaltelektroden auf, die mit Abstand voneinander angeordnet sind. Hierdurch ist nicht nur eine rationelle Bearbeitung entsprechend großer Flächen möglich, sondern gleichzeitig weist diese Ausführungsform den Vorteil auf, daß unterschiedliche Bereiche der Werkstücke gleichzeitig unterschiedlich elektrochemisch bearbeitet werden können, was beispielsweise durch Variation des Elektrolyts oder des Abstandes der einzelnen Elektroden mit dem Werkstück bewirkt werden kann. Werden diese Elektroden zusätzlich von der elektrischen Schaltung noch derart gesteuert, daß sie einzeln hintereinander oder nach einem vorgegebenen Schema mit der Spannungsquelle verbunden werden, so besteht beispielsweise die Möglichkeit, an bestimmten Bereichen des Werkstückes einen Elektrolyt galvanisch abzuscheiden, an anderen Bereichen des Werkstückes einen Teil der Oberfläche abzutragen oder an weiteren Bereichen, z. B. durch anodische Oxidation oder Ätzung, die chemische Zusammensetzung der Oberfläche zu verändern.

Bei einer weiteren Ausführungsform der erfindungsgemäßen Vorrichtung weist die Spaltelektrode eine zwischen dem ersten Elektrodenabschnitt und dem Spalt angeordnete Schicht auf, die aus einem komprimierbaren Material besteht. Vorzugsweise wird hierfür ein Filz, beispielsweise aus Merinowolle, einem synthetischen Fasermaterial oder Graphit, eingesetzt, wobei diese Filzschicht eine Reinigung des Elektrolyts infolge mechanischer Filtration bewirkt. Darüberhinaus dient diese Schicht noch als Elektrolytspeicher und stellt stets sicher, daß zwischen dem ersten Elektrodenabschnitt und der zu bearbeitenden Kante bzw. Fläche des Werkstückes genügend Elektrolyt vorhanden ist. Darüberhinaus bewirkt die Filzschicht eine Kühlung der sich bei der elektrochemischen Bearbeitung ggf. erwärmenden Spaltelektrode. Ist diese Schicht zudem noch derart in der Spaltelektrode angeordnet, daß sie über diese vorsteht, so kann sie sich in hervorragender Weise an die in der zu bearbeitenden Kante bzw. Fläche des Werkstückes ggf. vorhandenen Unebenheiten oder an die Form des zu bearbeitenden Werkstückes anpassen, was beispielsweise bei der elektrochemischen Bearbeitung von gedruckten Leiterplatten zu einer sehr geringen Unterätzung und somit zu ausgezeichneten Ergebnissen führt.

Eine andere Ausführungsform der erfindungsgemäßen Vorrichtung sieht vor, daß der in der Spaltelektrode vorgesehene Spalt in seiner Größe veränderbar ist. Dies kann beispielsweise dadurch erreicht werden, daß der zweite Elektrodenabschnitt, der den ersten Elektrodenabschnitt umhüllt, aus einem flexiblen Material besteht und der erste Elektrodenabschnitt relativ zum zweiten Elektrodenabschnitt axial verschiebbar angeordnet und derart ausgebildet ist, daß ein Verschieben des ersten Elektrodenabschnitts in Richtung auf das Werkstück eine radiale Vergrößerung des zweiten Elektrodenabschnitts und damit eine Aufweitung des Spaltdurchmessers und eine hierzu entgegengesetzte Verschiebung eine radiale Verengung des zweiten Elektrodenabschnitts und somit eine Verkleinerung des Spaltdurchmessers bewirken. Ebenso kann dem Spalt eine Blendenvorrichtung zugeordnet sein, mittels der der Spaltdurchmesser sowie die Querschnittsform des Spaltes beliebig veränderbar und an den jeweiligen Anwendungsfall anpaßbar ist.

Im einfachsten Fall ist bei der erfindungsgemäßen Vorrichtung die Zuführeinrichtung für den Elektrolyten als eine, sich durch den ersten Elektrodenabschnitt erstreckende Bohrung ausgebildet. Selbstverständlich kann der Elektrolyt auch anders zugeführt werden, wobei es jedoch stets erforderlich ist, daß der Elektrolyt mit dem mit der Spannungsquelle verbundenen ersten Elektrodenabschnitt in Kontakt gelangt. So können beispielsweise mehrere Bohrungen in dem ersten Elektrodenabschnitt vorgesehen sein, durch die der Elektrolyt zu dem Spalt und der darunter angeordneten Kante bzw. Fläche des Werkstückes gelangt. Auch können entsprechende Zuführeinrichtungen zwischen dem ersten und zweiten Elektrodenabschnitt angeordnet sein, die eine kontinuierliche Versorgung des Spaltes mit Elektrolyt sicherstellen. Vorzugsweise wird der Elektrolyt als Elektrolytflüssigkeit, beispielsweise als Elektrolytlösung oder -dispersion, mittels einer Pumpe von einem Vorratsbehältnis über den Spalt zu einem unterhalb des Spaltes angeordneten Werkstück gepumpt, wobei eine unterhalb des Werkstückes angeordnete Auffangvorrichtung die von dem Werkstück abtropfende Elektrolytflüssigkeit auffängt.

Um die bei der elektrochemischen Bearbeitung der Werkstücke an der Spaltelektrode ggf. entstehenden Gase abzuführen, weist eine weitere Ausführungsform der erfindungsgemäßen Vorrichtung eine dem Spalt zugeordnete Absaugeinrichtung auf. Hierbei bewirkt diese Absaugeinrichtung ferner noch eine Kühlung der Spaltelektrode, deren unteres Ende sich oftmals insbesondere bei hohen Stromdichten erwärmt.

Eine weitere Variante des erfindungsgemäßen Verfahrens zeichnet sich dadurch aus, daß man einen Strom des Elektrolyts flächig auf die zu bearbeitende Fläche des Werkstücks richtet. Mit der Bezeichnung "flächig" ist hierbei gemeint, daß der Elektrolytstrom eine gewisse Querabmessung besitzt, so daß er einen bestimmten Flächenbereich des Werkstücks abdeckt, wobei dieser Bereich über einen linienförmigen oder punktförmigen Kontaktbereich hinausgeht. Ein derartiger Elektrolytstrom mit erweitertem Querschnitt kann beispielsweise so erzeugt werden, daß der Spalt der Spaltelektrode so weit vergrößert wird, bis sich ein Elektrolytstrom einer bestimmten Querschnittsabmessung ergibt. Es können jedoch auch sogenannte Flächenelektroden zur Anwendung gelangen, die ein plattenförmiges Elektrodenelement besitzen und bei denen der Elektrolytstrom durch das plattenförmige Elektrodenelement geführt und dann senkrecht auf die Werkstücksoberfläche trifft. Bei einer solchen Flächenelektrode kann der Elektrolytstrom jedoch auch parallel zur Werkstücksoberfläche in den zwischen Elektrode und Werkstücksoberfläche vorhandenen Spalt geführt werden.

Es ist an dieser Stelle zu bemerken, daß bei der Erfindung immer ein "Elektrolytstrom" zur Anwendung gelangt, der eine begrenzte Fläche des zu behandelnden Werkstückes bedeckt. Dies steht im Gegensatz zu galvanischen Bädern, bei denen die Werkstücke in Behältnisse getaucht werden, die einen Elektrolyten enthalten. Bei dem erfindungsgemäßen Verfahren wird der Strom des Elektrolyten über die Elektrode selbst auf die zu behandelnde Werkstücksoberfläche geführt. In Abwandlung dieser Vorgehensweise ist es jedoch auch möglich, wie vorstehend erwähnt, den Elektrolyt von der Elektrode getrennt auf die Werkstücksoberfläche zu führen, und zwar insbesondere parallel zur Werkstücksoberfläche.

Eine spezielle Verfahrensvariante betrifft die Herstellung von strukturierten Werkstücksoberflächen. Der Begriff "strukturierte Werkstücksoberfläche" soll hierbei bedeuten, daß die Werkstücksoberfläche in irgendeiner Weise ein bestimmtes Muster von Vertiefungen und/oder Erhöhungen aufweist, die beispielsweise Schriftbilder, rippenartige Oberflächenbereiche etc. bilden können. Unter diesen Begriff sollen auch die Oberflächen von Bohr- bzw. Fräsköpfen, Feilen, Raspeln etc. fallen, die einen mehr oder weniger hohen Rauhigkeitsgrad aufweisen. Es geht dabei speziell auch um die Herstellung von Nagelfeilen. Derartige Werkzeuge wurden bisher so hergestellt, daß ein entsprechendes Substrat mit einem mit Schleifpartikeln versetzten Überzug versehen wurde, wobei dieser Überzug je nach der Verwendung des speziellen Schleifmaterials einen mehr oder weniger hohen Grad an Rauhigkeit erhielt. Bei dem erfindungsgemäßen Verfahren wird zur Herstellung von derartigen Werkzeugen nunmehr so vorgegangen, daß man den Strom des Elektrolyten punktuell, linienförmig oder flächig nach einem bestimmten Muster auf die entsprechende Werkstücksoberfläche einwirken läßt. Dies wird so verwirklicht, daß man entweder die den Strom des Elektrolyten abgebende Elektrode oder das zugehörige Werkstück relativ zum anderen Element bewegt, und zwar so, daß das bestimmte Muster beispielsweise durch Ätzung oder durch galvanische Abscheidung eines Materials erzeugt wird. Es versteht sich, daß es hierbei auf eine genaue Führung der Elektrode bzw. des Werkstückes ankommt, damit sich das gewünschte Muster verwirklichen läßt.

Eine bevorzugte Verfahrensvariante zur Herstellung von derartigen strukturierten Werkstücksoberflächen, insbesondere Nagelfeilen, läuft so ab, daß man anfangs eine isolierende und elektrolytresistente Trennschicht auf die zu bearbeitende Werkstücksoberfläche aufbringt, Teile der Trennschicht gemäß der herzustellenden Oberflächenstruktur zur Freigabe von bestimmten Oberflächenbereichen zum Elektrolytkontakt entfernt, eine Elektrode, d. h. eine Spaltelektrode oder Flächenelektrode, benachbart zur Werkstücksoberfläche anordnet, einen Elektrolytstrom zwischen Elektrode und Werkstücksoberfläche flächig, linienförmig oder punktuell auf diese aufbringt und einen elektrischen Strom zwischen Elektrode und zu bearbeitender Werkstücksoberfläche fließen läßt. Hierdurch werden die trennschichtfreien Oberflächenbereiche ausgeätzt bzw. es wird auf diesen Bereichen galvanisch Material abgeschieden.

Dieses Verfahren arbeitet somit mit einer Abdeckung der nicht zu bearbeitenden Bereiche der Werkstücksoberfläche. Diese Vorgehensweise hat gegenüber der vorstehend geschilderten Verfahrensvariante, bei der ohne Abdeckung gearbeitet wird, den Vorteil, daß sich hierbei besonders scharfe Kanten zwischen den abgeschiedenen bzw. ausgeätzten Bereichen und den stehengebliebenen Bereichen der Werkstücksoberfläche erzielen lassen. Eine solche Vorgehensweise ist daher insbesondere für die Herstellung von solchen Werkzeugen geeignet, die ein besonders hohes Maß an Rauhigkeit aufweisen müssen, wie beispielsweise Nagelfeilen, Bohr- bzw. Fräswerkzeuge des zahntechnischen Bereiches etc.

Bei der aufzubringenden Trennschicht bzw. Sperrschicht kann es sich um eine Schicht aus irgendeinem geeigneten Material handeln, das elektrisch isolierende und elektrolytresistente Eigenschaften aufweist. Beispielsweise können hierzu geeignete Fotoresiste Verwendung finden, auf die auf fotografischem Wege das auszubildende Muster aufgebracht wird. Die gemäß dem Muster vorgesehenen Freistellen der Trennschicht werden dann durch Ätzen entfernt, wobei die ätzresistenten Musterbereiche als erhabene Stellen der Trennschicht auf der Werkstückoberfläche verbleiben. Derartige Verfahren sind insbesondere bei der Herstellung von gedruckten Schaltungen bekannt und stellen als solche keinen Teil der Erfindung dar. Ihre Anwendung in Verbindung mit einer speziellen Elektrolytführung und galvanischen Bearbeitung zur Herstellung von strukturierten Oberflächen ist jedoch neu. Mit dem vorstehend beschriebenen Verfahren lassen sich speziell Nagelfeilen verschiedener Grobheiten herstellen. Dabei wird als Substrat ein Edelstahl oder vergüteter Stahl verwendet, und das Material wird vor der Behandlung in einen blanken, fettfreien Zustand gebracht. Es wird dann die Trennschicht bzw. Sperrschicht (Trockenresist, Fotoresist, Lack, Film) aufgebracht, die beispielsweise eine Dicke von 20 - 50 µm aufweisen sollte. Bei der Auswahl der entsprechenden Trennschichtmaterialien sollte besonders darauf geachtet werden, daß diese auch gegen Kurzschluß resistent sind und ein gutes Auftragungsvermögen besitzen.

Nach der Herstellung des gewünschten Musters in der Trennschicht - bei der hier in Rede stehenden Herstellung von Nagelfeilen handelt es sich um ein Muster mit wahlloser Verteilung von erhabenen Punkten - wird die entsprechende Elektrode, die zum Ätzen als Kathode geschaltet wird, in einem geeigneten Abstand, beispielsweise 1 cm, von der Trennschichtoberfläche angeordnet. Der entsprechende Ätzelektrolyt wird über eine Pumpe umgewälzt und durch die Ätzelektrode den Freistellen in der Trennschicht flächig, linienförmig oder punktuell zugeführt. Danach läßt man einen geeigneten Strom fließen, wobei die Feilenware als Anode geschaltet wird.

Bei dem vorstehend geschilderten Verfahren wird vorzugsweise mit Wechselstrom in einem Frequenzbereich von 0,65 Hz bis 100 kHz, einer Spannung bis 180 V und einer Stromstärke bis 100 A gearbeitet. Je nach Materialeigenschaften können die in Verbindung mit der Spaltelektrode erwähnten zyklischen Arbeitsweisen Anwendung finden.

Die Ätzung erfolgt vorzugsweise mit einer Stromdichte von mindestens 50 A/dm². Nach Art der verwendeten Kathode kann die kathodische Stromdichte bis zu 25.000 A/dm² betragen. Die Elektrolytbewegung sollte mindestens 200 l/h betragen und 5.000 l/min nicht übersteigen. Um sehr scharfe Kanten im Ätzbereich zu erzeugen, ist nur ein kurzer Kontakt durch elektrischen Strom erforderlich.

Eine Vorrichtung zur Durchführung der verstehend erläuterten Verfahrens variante ist in den Patentantsprüchen 15-18 beschrieben.

Die erfindungsgemäßen Vorichtungen sowie das erfindungsgemäße Verfahren werden nachfolgend anhand von Ausführungsformen in Verbindung mit der Zeichnung sowie anhand von Ausführungsbeispielen näher erläutert. Es zeigen:
- Figur 1: eine schematische Darstellung einer Ausführungsform der Vorrichtung;
- Figur 2: eine schematische Schnittansicht einer Spaltelektrode;
- Figur 3: ein Blockschaltbild einer Ausführungsform einer elektrischen Schaltung;
- Figur 4: eine schematische Ansicht der Verfahrensstufen bei der Herstellung einer Nagelfeile;
- Figur 5: eine schematische Ansicht einer ersten Ausführungsform einer Flächenelektrode;
- Figur 6: eine schematische Ansicht einer zweiten Ausführungsform einer Flächenelektrode; und
- Figur 7: einen Schnitt durch eine schematisch dargestellte Spezialelektrode zur Behandlung von rotationssymmetrischen Gegenständen.

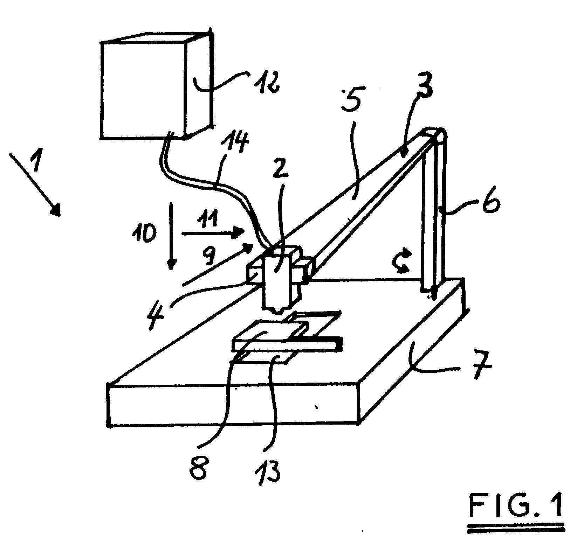

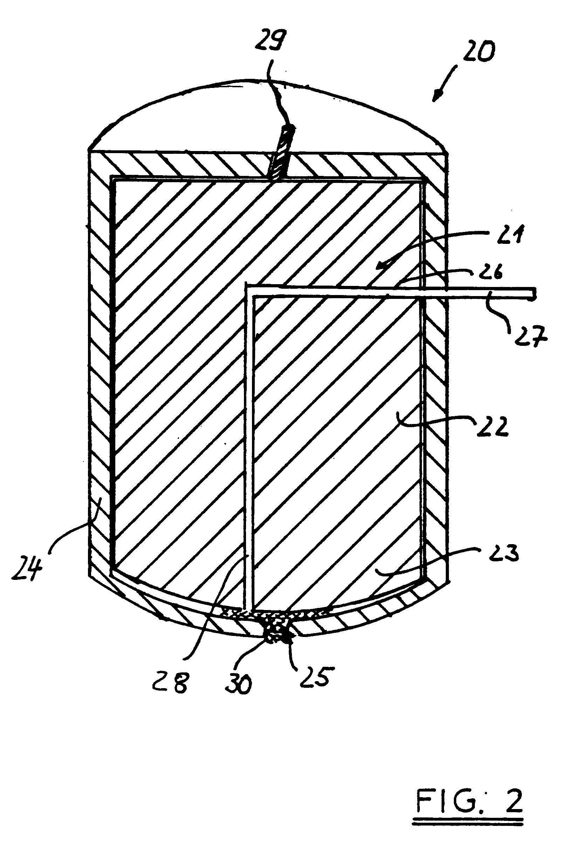

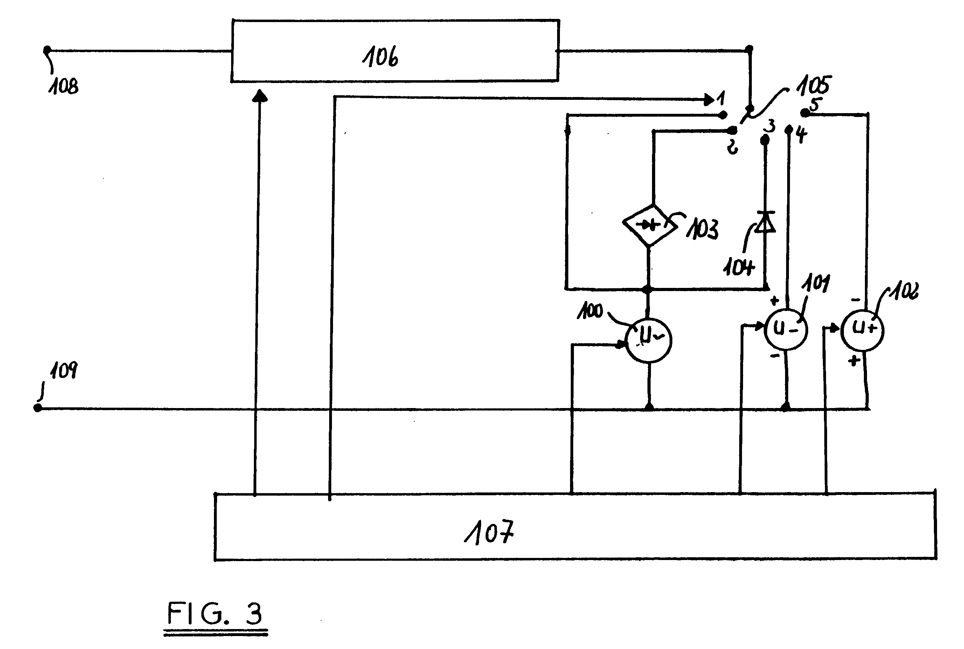

Eine in Figur 1 dargestellte, insgesamt mit 1 bezeichnete Vorrichtung zur elektrochemischen Bearbeitung von Werkstücken weist eine Spaltelektrode 2 auf, deren Aufbau nachstehend noch bei der Figur 2 näher erläutert wird. Die Spaltelektrode 2 ist an einer Fördereinrichtung 3 befestigt, die bei der dort gezeigten Ausführungsform einen Halterungsabschnitt 4 für die Spaltelektrode 2, einen damit verbundenen Armabschnitt 5 sowie einen Standabschnitt 6 besitzt, mittels dem die Fördereinrichtung 3 an einem Lagerabschnitt 7 für ein Werkstück 8 befestigt ist. Die Fördereinrichtung 3 und somit auch die Spaltelektrode 2 ist relativ zu dem Lagerabschnitt 7 bewegbar angeordnet. Um eine Bewegung der Elektrode in Pfeilrichtung 9, 10 oder 11 bzw. umgekehrt hierzu zu ermöglichen, weist die Fördereinrichtung 3 entsprechende Gelenke auf, die jeweils zwischen den Abschnitten 4 und 5 sowie 5 und 6 angeordnet sind. Ferner ist der Standabschnitt 6 der Fördereinrichtung 3 drehbar an dem Lagerabschnitt 7 befestigt. Unterhalb der zu bearbeitenden Kante bzw. Fläche des Werkstückes 8 ist ein Auffangbehältnis 13 angeordnet, das bei der in Figur 1 gezeigten Ausführungsform von einer in dem Lagerabschnitt 7 vorgesehenen Ausnehmung gebildet wird. Dieses Auffangbehältnis 13 ist über eine nicht gezeigte Rohrleitung mit einem Vorratsbehältnis 12 verbunden, das oberhalb der Spaltelektrode 2 angeordnet ist und zur Aufnahme von Elektrolyt bzw. Elektrolytflüssigkeit dient. Von diesem Vorratsbehältnis 12 wird der Elektrolyt bzw. die Elektrolytflüssigkeit über eine flexible Rohrleitung 14 der Spaltelektrode zugeführt, wobei eine nicht dargestellte Pumpe einen gleichmäßigen, einstellbaren Strom von Elektrolyt bzw. -flüssigkeit durch die Elektrode zum Werkstück 8 sicherstellt. Das Werkstück 8 sowie die Spaltelektrode 2 sind über eine nicht gezeigte elektrische Schaltung, deren Blockschaltbild in Figur 3 dargestellt ist, mit einer Spannungsquelle verbunden. Hierbei fließt zwischen der Spaltelektrode und dem Werkstück immer dann ein elektrischer Strom, wenn der über die Spaltelektrode abgegebene Strom des Elektrolyts bzw. der Elektrolytflüssigkeit auf die zu bearbeitende Fläche punktuell oder linienförmig auftrifft. Durch Bewegen der Spaltelektrode relativ zum Werkstück in Pfeilrichtung 9, 10, 11 oder umgekehrt hierzu erfolgt dann die gewünschte linienförmige bzw. ganzflächige elektrochemische Bearbeitung des Werkstückes. Selbstverständlich ist es möglich, der Fördereinrichtung eine an sich bekannte Steuereinrichtung zuzuordnen, die einen vorgegebenen Bewegungsablauf der Fördereinrichtung 3 steuert. Ebenfalls kann der Abschnitt 4 derart ausgebildet sein, daß er mehrere Spaltelektroden gleichzeitig haltert. Hierdurch wird ermöglicht, daß gleichzeitig mehrere Bereiche der jeweiligen Kante bzw. Fläche des Werkstückes elektrochemisch bearbeitet werden.

Eine in Figur 2 abgebildete, insgesamt mit 20 bezeichnete Spaltelektrode weist einen ersten Elektrodenabschnitt 21 auf, der einen zylindrischen oberen Abschnitt 22 und einen damit einstückig ausgebildeten halbkugelförmigen Endabschnitt 23 besitzt. Hierbei besteht der erste Elektrodenabschnitt 21 aus einem leitfähigen, üblicherweise für Elektroden verwendeten Material, wie beispielsweise Graphit, Edelmetallen o. ä. Der erste Elektrodenabschnitt 21 wird bei der in Figur 2 gezeigten Ausführungform vollständig von einem zweiten Elektrodenabschnitt 24 aus einem nicht leitfähigen Material, wie beispielsweise einem Fluorpolymeren oder einem anderen Kunststoff, umhüllt. In einem unteren Bereich des zweiten Elektrodenabschnitts 24 ist ein Spalt 25 angeordnet, der bei der in Figur 2 gezeigten Ausführungsform aus einer konischen Bohrung besteht, die sich durch die gesamte Wandstärke des zweiten Elektrodenabschnitts erstreckt. In einem oberen Bereich 26 der Elektrode ist eine Zuführleitung 27 angeordnet, mittels der ein Elektrolyt bzw. eine Elektrolyflüssigkeit über eine sich durch den gesamten ersten Elektrodenabschnitt erstreckenden Bohrung 28 dem Spalt 25 zugeführt werden. An ihrem oberen Ende weist die Spaltelektrode 20 ein Anschlußelement 29 auf, das mit dem ersten Elektrodenabschnitt 21 verbunden ist und mittels dem die Spaltelektrode 20 an eine nicht gezeigte Spannungsquelle angeschlossen werden kann. Oberhalb des Spaltes 25 sowie innerhalb desselben ist eine Schicht 30 eines komprimierbaren Materials angeordnet, die jedoch für den Elektrolyten bzw. die Elektrolytflüssigkeit durchlässig ist. Hierbei bewirkt diese Schicht 30 ein Filtrieren des Elektrolyts und gleichzeitig eine möglichst gleichmäßige Verteilung desselben über den Querschnitt des Spaltes, so daß ein in seinen geometrischen Abmessungen konstanter Strom von Elektrolyt bzw. Elektrolytflüssigkeit durch den Spalt abgegeben wird. Festzuhalten ist jedoch in diesem Zusammenhang, daß für die Anwendungsfälle, bei denen beispielsweise mit Schleifstoffpartikeln versetzte Elektrolyte abgeschieden werden sollen, eine Spaltelektrode zur Anwendung gelangt, die eine derartige Schicht nicht aufweist.

In Figur 3 ist ein Blockschaltbild einer bevorzugten Ausführungsform dargestellt. Diese weist eine Wechselspannungsquelle 100 sowie eine positive Gleichspannungsquelle 101 und eine negative Gleichspannungsquelle 102 auf. Ferner besitzt sie einen Doppelweggleichrichter 103, einen Einweggleichrichter 104 sowie einen in fünf verschiedenen Stellungen schaltbaren Schalter 105, der vorzugsweise aus elektronischen Bauelementen, wie beispielsweise Thyristoren, besteht. Ferner ist eine Strombegrenzungsschaltung 106 sowie eine Ansteuerelektronik 107 vorhanden, mittels der die Strombegrenzungsschaltung 106, die Betätigung des Schalters 105, die Wechselspannungsquelle 100 sowie die Gleichspannungsquellen 101 bzw. 102 gesteuert werden. Mit der Strombegrenzungsschaltung 106 ist bei dem dargestellten Blockschaltbild eine Spaltelektrode 108 und mit den Spannungsquellen ein nicht abgebildetes Werkstück 109 verbunden.

Die Ansteuerelektronik 107 ermöglicht die Einstellung des jeweils gewünschten Spannungsniveaus, wie beispielsweise eines ersten Spannungsbereiches bis 100 V und eines zweiten Spannungsbereiches bis 15 V. Selbstverständlich ist es möglich, auch mehr als zwei Spannungsniveaus vorzusehen, wobei eine derartige Einstellung sowohl für die Wechselspannungsquelle 100 als auch für die Gleichspannungsquellen 101 bzw. 102 gilt. Desweiteren besitzt die Ansteuerelektronik 107 einen Ausgang zur Vorgabe des maximalen Stroms bzw. der maximalen Ströme für die Strombegrenzungsschaltung, wie dies durch einen Wirkungspfeil 110 angedeutet ist. Ebenfalls durch die Ansteuerelektronik 107 wird die Betätigung des Schalters 105 durchgeführt. Hierbei bewirkt der Schalter 105 in seiner ersten Stellung das Anlegen einer Wechselspannung, in seiner zweiten Stellung das Anlegen einer doppelweggleichgerichteten Wechselspannung, in seiner dritten Stellung das Anlegen einer einweggleichgerichteten Wechselspannung, in seiner vierten Stellung das Anlegen einer positiven Gleichspannung und in seiner fünften Stellung das Anlegen einer negativen Gleichspannungs jeweils zwischen der Spaltelektrode 108 und dem Werkstück 109. Selbstverständlich ist es möglich, mit der vorstehend beschriebenen Schaltung auch mehrere Spaltelektroden parallel zu betreiben.

### Beispiel 1

Die Oberfläche von Werkstücken aus Stahl, Eisen-Stahllegierungen sowie austenitischen Stählen wurde mit der vorstehend beschriebenen Vorrichtung anodisch oxidiert. Hierbei gelangte eine Wechselspannungsquelle zur Anwendung, die in zwei Stufen schaltbar war. Die Spannung in der ersten Stufe betrug bis zu 35 V und in der zweiten Stufe bis zu 15 V, woraus eine Stromdichte an der als Kathode geschalteten Spaltelektrode der ersten Spannungsstufe von 10 A/cm² und in der zweiten Stufe von 0,5 A/cm² resultierte. Die Spaltelektrode wurde mit einer Geschwindigkeit von 1 cm/sec über die zu bearbeitende Fläche bzw. Kante des Werkstückes bewegt. Hierbei wies die Spaltelektrode einen ersten Elektrodenabschnitt aus Graphit und einen Spalt mit einer Breite von 1 mm und einer Höhe von 10 mm auf. Zwischen dem ersten Elektrodenabschnitt und dem Spalt war eine Filzschicht angeordnet. Als Elektrolyt wurde eine Elektrolyflüssigkeit verwendet, die aus einer Mischung von Kochsalz und Ammoniumchlorid, Triäthanolamin, Butindiol und einem Komplexbildner, wie beispielsweise Nitrilotriessigsäure, bestand.

Die so erzeugte Oxidschicht ist äußerst widerstandsfähig und abriebsfest gegenüber mechanischen Beanspruchungen. Abhängig von den Behandlungszeiten in den jeweiligen Stufen sowie der chemischen Zusammensetzung des Elektrolyts besitzt sie eine dunkelgraue bis schwarze Farbe. Ferner ist ihre Korrosionsfestigkeit gegenüber korrosiven Medien im Vergleich zu nach bekannten Verfahren hergestellten Oxidschichten wesentlich grösser.

### Beispiel 2

Zur anodischen Signierung wurde das mit einer Edelmetallschicht versehene Werkstück an eine Wechselspannung oder eine Gleichspannung sowie eine Kombination dieser beiden Spannungen angeschlossen. Hierbei wurde zusätzlich die Behandlungszeit in den beiden Spannungsstufen innerhalb der in Beispiel 1 aufgeführten Größen variiert, wobei diese so aufeinander abgestimmt waren, daß in der ersten Stufe die Stromdichte an der Spaltelektrode einen etwa zehnfachen Wert der Stromdichte der zweiten Stufe aufwies. Als Elektrolyt diente eine Lösung von Ammoniumchlorid mit Kaliumnatriumtartrat, wobei diese Lösung zusätzlich noch einen Komplexbildner auf Basis einer organischen Phosphorsäureverbindung enthielt. Die Spaltelektrode wurde zur Erzeugung eines bestimmten Signiermusters nach einem vorgegebenen Muster über die zu bearbeitende Fläche bzw. Kante des Werkstückes bewegt, wobei zusätzlich zur Herstellung von farblich unterschiedlich signierten Bereichen die Geschwindigkeit in einem Bereich zwischen etwa 1 m/sec und etwa 0,1 m/sec verändert wurde.

Allgemein ist festzuhalten, daß bei Anwendung von Gleichspannung relativ helle Signierungen bzw. Ätzungen, von Wechselspannung abhängig von dem Grundmaterial des eingesetzten Werkstückes dunkelgraue bis schwarze Ätzungen mit unterschiedlichem Glanz und von einer Kombination von Gleich- sowie Wechselspannung sehr tiefe Ätzungen resultierten. die bei einigen Metallen sogar farbig waren. Ebenso wie die Art der angelegten Spannung beeinflußte auch die Behandlungszeit in den einzelnen Spannungsstufen das Ergebnis der Ätzung, wobei die Behandlungszeit bei der hohen Stromdichte etwa einem Zehntel der Behandlungszeit bei der niedrigen Stromdichte entsprach.

### Beispiel 3

Die vorstehend beschriebene Vorrichtung wurde zur elektrolytischen Entfettung sowie Ätzung von kupferkaschierten Leiterplatten verwendet. Hierbei gelangte die in Beispiel 1 beschriebene Spaltelektrode zur Anwendung. Die Entfettung und Ätzung wurde bei unterschiedlichen Stromdichten durchgeführt, wobei für die Entfettung Werte bis zu 1000 A/dm² und für die Ätzung Stromdichten bis zu 150 00 A/dm² angewendet wurden. Auch hierbei wurde die Spannung in zwei Bereichen entsprechend dem vorstehend Beschriebenen verändert, wobei die Behandlungszeiten in den einzelnen Spannungsstufen zwischen 0,1 Mikrosekunden und 10 Minuten variiert wurden. Die Spaltelektrode lag auf den Kanten der Leiterplatten auf und wurde mit einer Geschwindigkeit von etwa 30 cm/min bewegt. Als Elektrolyt diente eine für diese Zwecke handelsübliche Elektrolylösung.

Hierbei wurde festgestellt, daß besonders gute Ergebnisse bezüglich einer geringen Unterätzung dann erzielt werden, wenn die Stromdichte an der Spaltelektrode in der ersten Spannungsstufe zwischen etwa 0,1 A/cm² bis etwa 250 A/cm² und in der zweiten Spannungsstufe zwischen etwa 0,1 A/cm² bis etwa 50 A/cm² verändert wird.

### Beispiel 4

Für die galvanische Abscheidung von feststoffhaltigen Nickelniederschlägen wurde eine speziell ausgebildete Spaltelektrode mit einer Gleichspannungs- oder Impulsspannungsquelle verbunden. Hierbei wies die Spaltelektrode einen schlitzförmig ausgebildeten Spalt auf, der eine Fläche von insgesamt etwa 25 mm² aufwies. Die Spalthöhe betrug 1,2 mm. Als Elektrolyt fand eine für derartige Zwecke handelsübliche Elektrolytflüssigkeit Anwendung, die zusätzlich noch mit gewissen Schleifstoffpartikeln versetzt war.

Die nach einem derartigen Verfahren hergestellten und mit Schleifstoffpartikeln versetzten Kanten bzw. Flächen des elektrochemisch behandelten Werkstückes weisen eine hohe Haltbarkeit auf, wobei die Körnigkeit der Oberfläche durch Variation der Größe der zu dem Elektrolyt zugesetzten Schleifstoffpartikel veränderbar ist.

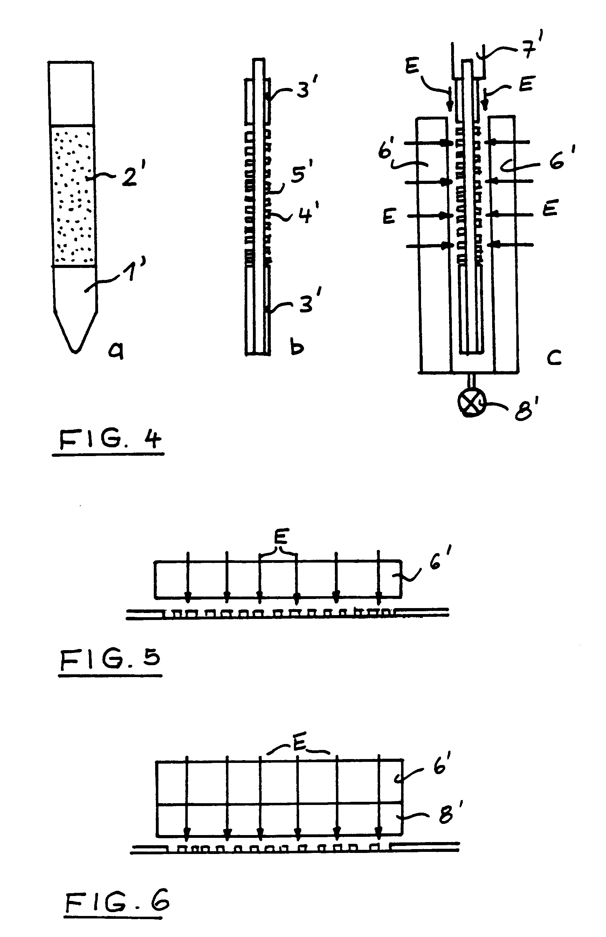

Es werden numnehr die im Fig. 4-7 darges dargestellten weiteren Ausführungsformen beschrieben. Figur 4a zeigt ein zu einer Nagelfeile zu bearbeitendes Werkstück 1'in der Draufsicht, wobei der Bereich des Werkstücks, dessen Oberfläche strukuriert werden soll, um eine entsprechend hohe Rauhigkeit zu erzielen, bei 2'dargestellt ist. Figur 4b zeigt das Werkstück der Figur 1 in der Seitenansicht nach Aufbringung einer Trennschicht aus einem geeigneten isolierenden und elektrolytresistenten Material, wobei bereits in dem zu bearbeitenden Bereich das entsprechende Muster in der Trennschicht ausgebildet ist, so daß erhabene Trennschichtbereiche 4' neben Freistellen 5'angeordnet sind. Die nicht zu bearbeitenden Bereiche des Werkstückes können ebenfalls mit der Trennschicht 3'beschichtet sein, um diese Bereiche nicht mit dem Elektrolvten in Kontakt treten zu lassen.

Figur 4c zeigt die Anordnung zweiter Flächenelektroden 6', zwischen die das Werkstück der Figur 4h geführt wird. Die Flächenelektroden 6' sind dabei in einem Abstand von ca. 1 cm von der Oberfläche des Trockenresistes angeordnet. Bei 7'ist eine geeignete Anodenklammer dargestellt. Bei diesem Ausführungsbeispiel wird Elektrolyt entweder über die Flächenelektroden 6'senkrecht auf das Werkstück oder parallel zur Werkstücksoberfläche geführt. Beide Varianten sind ebenfalls möglich. Der überschüssige Elektrolyt wird über eine Pumpe 8'abgezogen. Der hier verwendete Ätzelektrolyt tritt mit den Freistellen auf der Oberfläche des Werkstücks in Kontakt und führt dort zu Materialausätzungen, deren Tiefe steuerbar ist. Die mit der Trennschicht versehenen Teile der Werkstücksoberfläche werden vom Elektrolyten nicht angegriffen, so daß sich letztendlich sehr scharfe Kanten zwischen den ausgeätzten Bereichen und den unbehandelten Bereichen ergeben. Wenn der Ätzvorgang beendet und die gewünschte Rauhigkeit erzielt ist, wird die Trennschicht in einem geeigneten Behandlungsschritt wieder entfernt.

Die Figuren 5 und 6 zeigen Varianten von Flächenelektroden, die bei dem vorstehend beschriebenen Verfahren Verwendung finden können. Bei der in Figur 5 dargestellten Elektrode ist ein plattenförmiges Elektrodenelement vorgesehen, das aus einem geeigneten elektrisch leitenden Material, wie Graphit, Sinterkohle etc., besteht. Das Material ist porös und kann eine entsprechende Menge Elektrolyt speichern, der an der Unterseite des Elektrodenelementes austritt und mit der zu behandelnden Werkstückoberfläche in Kontakt tritt.

Bei der in Figur 6 dargestellten Flächenelektrode ist zwischen dem Elektrodenelement und der Werkstückoberfläehe ein geeignetes poröses Diaphragma 8' aus dielektrischem Material vorgesehen, das ebenfalls porös ist und den von der Elektrode 6' zugeführten Elektrolyt speichert bzw. an die zu behandelnde Werkstückoberfläche abgibt. Je nach Schaltung der Elektroden können hiermit Beschichtungsvorgänge oder Ätzvorgänge durchgeführt werden.

Es versteht sich, daß die hier beschriebenen Flächenelektroden auch mit den Stromarten bzw. Zyklen betrieben und Schaltungen versehen sein können, die in Verbindung mit der Spaltelektrode vorstehend beschrieben wurden.

Bei den vorstehend beschriebenen Verfahren finden geeignete Flüssigelektrolyte einschließlich Schmelzelektrolyte Anwendung, die nach dem speziellen Bearbeitungsziel, d. h. entweder Ätzen oder galvanisch Abscheiden, ausgewählt sind. Geeignete Elektrolyten sind bekannt und müssen an dieser Stelle nicht speziell aufgeführt werden.

Ein geeignetes Material für das vorstehend erwähnte Diaphragma ist Polytetrafluoräthylen.

Je nach Größe der Flächenelektroden können diese den gesamten zu behandelnden Oberflächenbereich des Werkstückes oder nur einen Teil davon abdecken. Im zweiten Fall findet zwischen Flächenelektrode und Werkstück eine Relativbewegung statt, wie dies in Verbindung mit der Spaltelektrode beschrieben wurde.

Wie erwähnt, können die entsprechend strukturierten Oberflächenbereiche auch durch das galvanische Abscheiden von Materialien auf die entsprechenden Freistellen erzielt werden. Es finden hierbei reine Metallelektrolyte, wie beispielsweise zur Abscheidung von Nickel, Verwendung. Auch beim Abscheiden von Materialien bringt das Arbeiten mit Wechselstrom entsprechende Vorteile mit sich, beispielsweise eine bessere Haftung des abgeschiedenen Materials, eine verbesserte Korrosionsbeständigkeit, eine dichtere kristalline Struktur etc. Es lassen sich ferner genau definierte Legierungen abscheiden.

Die eingangs erwähnte Spaltelektrode hat den Vorteil, daß hiermit aufgrund der geringen Fläche sehr hohe Stromdichten erzieltbar sind. Auf diese Weise ist ein besonders schnelles Abscheiden bzw. Ätzen möglich, was zu einem genaueren Arbeiten mit weniger Verunreinigungen führt. Es werden hierdurch besonders gute Vorbedingungen für nachfolgende Verfahrensschritte geschaffen, insbesondere in bezug auf das Diffusionsverhalten. Es versteht sich, daß diese Vorteile mit Flächenelektroden nur bedingt erreichbar sind, jedoch weisen diese gegenüber galvanischen Bädern immer noch entsprechende vorteilhafte Wirkungen auf.

Im übrigen können auch bei der hier beschriebenen Flächenelektrode sämtliche in Verbindung mit der Spaltelektrode aufgezeigten Maßnahmen Anwendung finden, soweit diese hierfür geeignet sind.

Ergänzend zu den vorstehenden Ausführungen soll daraufhingewiesen werden, daß sich die vorstehend geprägten Begriffe "Spaltelektrode" und "Flächenelektrode" bzw. die damit verbundenen Verfahrensweisen des punktuellen, linienförmigen und flächigen Aufbringens von Elektrolyt nur graduell voneinander unterscheiden. So tritt auch bei der "Flächenelektrode", die ein mehr oder weniger poröses Elektrodenelement bzw. Diaphragma aufweist, der Elektrolyt aus den Poren des entsprechenden Elementes aus, so daß hierdurch zumindest in der Austrittsphase eine Vielzahl von einzelnen Elektrolytströmen gebildet wird, die sich dann auf ihrem Weg zum Werkstück ggf. vereinigen. Wenn die entsprechenden Poren einen genügenden Abstand voneinander aufweisen, findet eine solche Vereinigung nicht statt, so daß hierbei eine Vielzahl von einzelnen Elektrolytströmen auf das Werkstück auftrifft. Es versteht sich dabei, daß es sich hierbei nicht nur um natürliche Poren zu handeln braucht; vielmehr kann auch auf künstliche Weise durch Anbringung von Bohrungen etc. eine entsprechende Porosität hergestellt werden. "Flächenelektrode" und "Spaltelektrode" sind daher in bezug auf die Aufbringung des Elektrolyten als einheitliche Vorrichtungen anzusehen.

Desweiteren ist daraufhinzuweisen, daß die Relativbewegung zwischen Elektrode und Werkstück keine Linearbewegung sein muß, sondern auch eine rotatorische Bewegung sein kann. Die Austrittsfläche des Elektrolyten an der Elektrode (Flächenelektrode oder Spaltelektrode) kann eben oder in irgendeiner Weise gekrümmt ausbildet sein, je nach dem zu behandelnden Werkstück und der durchzuführenden Behandlung. So kommen beispielsweise insbesondere konkave oder konvexe Flächen zur Anwendung.

Wie vorstehend erwähnt, kann der Elektrodenkopf eine Vielzahl von Austrittsöffnungen für den Elektrolyten aufweisen, die beispielsweise durch Bohrungen hergestellt sind. Neben punktförmigen Austrittsöffnungen können auch schlitzförmige Austrittsöffnungen vorhanden sein. Demnach kann der Elektrodenkopf der vorstehend beschriebenen Spaltelektrode nicht nur einen Spalt bzw. Schlitz, sondern eine Vielzahl von Spalten bzw. Schlitzen besitzen. Diese Schlitze können in entsprechenden Mustern am Elektrodenkopf angeordnet sein, beispielsweise parallel zueinander, gitterförmig oder aber auch radial auf einen Mittelpunkt des Kopfes weisend.

Eine weitere Ausführungsform der Erfindung zeichnet sich dadurch aus, daß die Elektrode als Hohlzylinder ausgebildet ist, wobei sowohl auf der äußeren als auch auf der inneren Mantelfläche des Zylinders Elektrolytaustrittsöffnungen angeordnet sein können. Diese Austrittsöffnungen können beispielsweise als Schlitze ausgebildet sein, die vorzugsweise zur Zylinderachse geneigt angeordnet sind. Wenn die Elektrolytaustrittsöffnungen auf der Innenseite der Elektrode, d. h. des Zylinders, angeordnet sind, lassen sich hiermit die Außenseiten von zylindrischen Körpern behandeln. Sind die Austrittsöffnungen auf der Außenseite angeordnet, können die Begrenzungsflächen von Bohrungen etc. behandelt werden.

Konische Ausgestaltungen der Elektroden sind ebenfalls möglich. Überhaupt ist die Erfindung nicht auf eine spezielle Form des Elektrodenkopfes beschränkt; vielmehr kann dieser in Anpassung an das zu behandelnde Werkstück beliebige Formen aufweisen, wobei die Elektrolytaustrittsöffnungen (Naturporen, Bohrungen, Schlitze etc.) an beliebigen Stellen des Kopfes in einer beliebigen Anordnung angeordnet sein können.

Wie bereits erwähnt, kann den Elektrodenköpfen ein Diaphragma zugeordnet sein. Dieses Diaphragma kann vor den Elektrolytaustrittsöffnungen der Elektrode angeordnet sein, jedoch auch in den Elektrolytaustrittsöffnungen der Elektrode. Bei der letztgenannten Ausführungsform ist daher eine Vielzahl von sehr kleinen Diaphragmaeinheiten in den jeweiligen Elektrolytaustrittsöffnungen angeordnet. Diese Diaphragmaeinheiten dienen zur Speicherung und gesteuerten Abgabe von Elektrolyt.

Ein weiteres Anwendungsbeispiel des erfindungsgemäßen Verfahrens bzw. der erfindungsgemäßen Elektrode ist das Polieren der Oberfläche von Werkstücken. Dies kann mit dem erfindungsgemäßen Verfahren mit sehr hoher Präzision durchgeführt werden, die bis in den Nanometerbereich reicht. Das Verfahren findet insbesondere bei der Herstellung von Metallspiegeln, insbesondere aus Beryllium, beim Polieren bzw. Schleifen von Ventilen, Düsen, Kolben, Zylindern Verwendung. Es werden hierbei insbesondere wäßrige Elektrolyten mit Salpetersäure, Phosphorsäure, Schwefeisäure als reaktivem Medium eingesetzt. Je nach Anwendungsfall kommen erfindungsgemäße Elektroden zum Einsatz, die eine unterschiedlich große Zahl von Elektrolytaustrittsöffnungen bzw. einen unterschiedlich großen Flächenbereich dieser Öffnungen aufweisen. Bei der Herstellung von Konkav- bzw. Konvexspiegeln findet ein entsprechend konkav bzw. konvex ausgebildeter Elektrodenkopf Anwendung, der mit schlitzförmigen Elektrolytaustrittsöffnungen versehen ist, welche eine radiale zum Mittelpunkt des Kopfes weisende Anordnung besitzen.

Bei diesen Polierverfahren kann mit oder ohne Poliertuch gearbeitet werden. Wenn mit Poliertuch gearbeitet wird, wird dieses über die Oberfläche des Elektrodenkopfes gespannt, so daß sämtliche Elektrolytaustrittsöffnungen abgedeckt sind.

Ein weiteres Anwendungsbeispiel des erfindungsgemäßen Verfahren bzw. der erfindungsgemäßen Elektrode betrifft die kontinuierliche galvanische Behandlung, d. h. Beschichtung, Phosphatierung, Ätzung, Polierung etc., von rotationssymmetrischen Gegenständen, beispielsweise Rohren, Draht. Bei dieser Ausführungsform ist die Elektrode als Hohlkörper ausgebildet, in dessen Innenraum ein zweiter Hohlkörper angeordnet ist, der eine Vielzahl von Durchgangsöffnungen aufweist, welche dessen hohlen Innenraum mit der Außenseite verbinden. Es kann sich hierbei beispielsweise um Bohrungen handeln. Dieser zweite Hohlkörper ist in irgendeiner Weise im Elektrodenhohlkörper fixiert, wobei zwischen Elektrodenhohlkörper und dem zweiten Hohlkörper ein entsprechender Abstand vorhanden ist. Der Elektrodenhohlkörper ist vorzugsweise an seinen axialen Enden verschlossen. Das zu behandelnde Werkstück, beispielsweise Draht, wird durch den Innenraum des zweiten Hohlkörpers gezogen. Der Elektrodenhohlkörper besitzt eine Elektrolytzuführeinrichtung, mittels der Elektrolyt in den Innenraum des Elektrodenhohlkörpers gepumpt wird, bis der Innenraum mit Elektrolyt gefüllt ist. Dieser Elektolyt dringt dann durch die Öffnungen im zweiten Hohlkörper in den Innenraum dieses Hohlkörpers ein und tritt dort mit dem zu behandelnden Draht in Kontakt. Läßt man einen Strom fließen, so erfolgt bei geeigneter Schaltung eine entsprechende galvanische Abscheidung auf der Drahtoberfläche. Überschüssiger Elektrolyt wird zusammen mit dem Draht aus der Austrittsöffnungen des zweiten Hohlkörpers herausgeführt und kann dort in einem Auffanggefäß aufgefangen und zur Weiterverwendung und zur Weiterverwendung zurückgepumpt werden.

Bei dieser Verfahrensweise kann der zweite Hohlkörper ein Diaphragma sein. Vorzugsweise wird jedoch ein elektrolytbeständiger Kunststoff- bzw. Keramikkörper eingesetzt, der mit künstlich hergestellten Elektrolytaustrittsöffnungen versehen ist. Wie bei den vorstehend beschriebenen Ausführungsformen kann zusätzlich zu diesem Körper ein Diaphragma Verwendung finden. Mit dieser Verfahrensvariante lassen sich sämtliche der vorstehend aufgezeigten elektrochemischen Behandlungsarten durchführen.

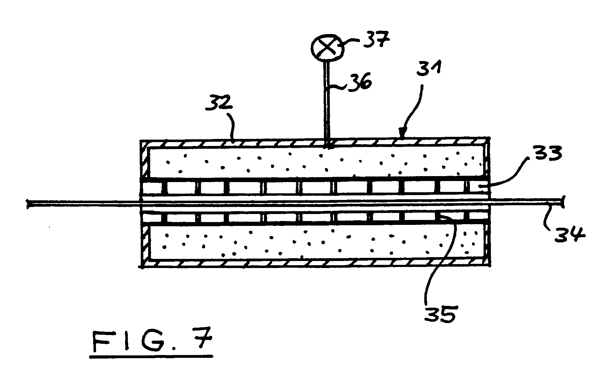

Figur 7 zeigt ein Ausführungsbeispiel einer derartigen Spezialelektrode. Die Spezialelektrode 31 zur Behandlung von rotationssymmetrischen Körpern besitzt eine hohlzylindrisch ausgebildete Metallelektrode 32 mit zwei Stirnwänden, die jeweils eine entsprechende Durchgangsöffnung aufweisen. In diesen Öffnungen ist ein hohlzylindrischer Kunststoffkörper 33 in fester und abgedichteter Weise montiert, der eine Vielzahl von Durchgangsbohrungen 35 aufweist, die sich von der Außenseite des Körpers bis in dessen inneren Hohlraum hineinerstrecken. Auf diese Weise wird innerhalb der Metallelektrode 32 eine Kammer gebildet, der Elektrolyt über eine mit einer Pumpte 37 versehene Zuleitung 36 zugeführt wird. Diese Kammer kann der Elektrolyt nur über die Bohrungen 35 verlassen. Er tritt dabei mit dem kontaktlos durch den Innenraum des Kunststoffkörpers 33 gezogenen Draht 35 in Kontakt, so daß die Oberfläche des Drahtes einer gleichmäßigen galvanischen Behandlung unterzogen wird, wenn bei geeigneter Schaltung als Anode und Kathode ein Strom fließt. Die Behandlung erfolgt kontinuierlich, wenn der Draht kontinuierlich durch die Spezialelektrode gezogen wird.

## Patentansprüche

1. Verfahren zum elektrochemischen Bearbeiten von Werkstücken (8, 1'), insbesondere zum Galvanisieren, Schärfen oder Oxidieren derselben, bei dem man zwischen einer zu bearbeitenden Kante bzw. Fläche des Werkstückes (8,1') und einer Elektrode (2, 20, 6 , 31) einen Elektrolyten anordnet und einen elektrischen Strom zwischen der Kante bzw Fläche und der Elektrode fließen läßt, dadurch gekennzeichnet, daß man einen gleichmäßigen, einstellbaren Flüssigkeitsstrahl des Elektrolyten ausgehend von der Elektrode (2, 20, 6', 31) punktuell , linienförmig oder flächig auf die zu bearbeitende Kante bzw. Fläche des Werkstückes (8, 1') richtet.

2. Verfahren nach Anspruch 1, dadurch gekennzeichnet, daß man die Kante bzw. Fläche des Werkstückes (8, 1') und die Elektrode (2, 20, 6', 31) relativ zueinander bewegt.

3. Verfahren nach Anspruch 2, dadurch gekennzeichnet, daß man die Elektrode (2, 20) in einem konstanten Abstand zu der zu bearbeitenden Kante bzw. Fläche des Werkstückes (8) bewegt.

4. Verfahren nach einem der vorangehenden Ansprüche zur Herstellung von strukturierten Werkstücksoberflächen, dadurch gekennzeichnet, daß man den Flüssigkeitsstrahl des Elektrolyten punktuell, linienförmig oder flächig nach einem bestimmten Muster auf die Werkstücksoberfläche einwirken läßt.

5. Verfahren nach einem der vorangehenden Ansprüche, dadurch gekennzeichnet, daß der Flüssigkeitsstrahl des Elektrolyten senkrecht auf die und/oder parallel zu der Werkstücksoberfläche geführt wird.

6. Verfahren nach einem der vorangehenden Ansprüche, dadurch gekennzeichnet, daß man abwechselnd eine hohe Stromdichte von 0,01 A/cm² bis 250 A/cm² und eine niedrige Stromdichte von 0,01 A/cm² bis 50 A/cm² an der Elektrode erzeugt, wobei man als niedrige Stromdichte eine solche auswählt, die etwa 5 - 20 % der hohen Stromdichte entspricht.

7. Verfahren nach Anspruch 5 oder 6, dadurch gekennzeichnet, daß man die hohe und niedrige Stromdichte für eine Periodenzahl zwischen 0,1 µ sec und 100 min anlegt.

8. Verfahren nach einem der vorangehenden Ansprüche, dadurch gekennzeichnet, daß man zwischen dem Werkstück (1') und der Elektrode (6') eine Schicht aus einem nicht leitenden Material anordnet, den Elektrolyt durch eine in der Schicht vorgesehene Öffnung zuführt und die Elektrode (6') in Kontakt mit der Schicht und diese in Kontakt mit dem Werkstück (1') bringt.

9. Verfahren nach einem der vorangehenden Ansprüche, dadurch gekennzeichnet, daß man wahlweise eine Gleich-, Wechsel- oder Impulsspannung und/oder deren Kombination an die Elektrode (2, 20, 6', 31) anlegt.

10. Vorrichtung zur Durchführung des Verfahrens nach einem der vorangehenden Ansprüche mit einer Spannungsquelle (100, 101, 102), die über eine elektrische Schaltung mit mindestens einem ersten Festspannungsregelkreis und einem zweiten Festspannungsregelkreis, denen jeweils eine Strombegrenzungsschaltung (106) zugeordnet ist, und einem Zeitschaltkreis mit der Elektrode (2, 20) und dem Werkstück (8) verbunden ist, und einem zwischen der Elektrode (2, 20) und dem Werkstück (8) angeordneten Elektrolyt, dadurch gekennzeichnet, daß die Elektrode (2, 20) als Spaltelektrode ausgebildet ist, die mindestens eine Zuführeinrichtung (27) für den Elektrolyten von einem ersten, elektrisch leitenden und mit der Spannungsquelle verbundenen Elektrodenabschnitt (21) zu einem Spalt (25) umfaßt, der in einem den ersten Elektrodenabschnitt mindestens teilweise umhüllenden zweiten Elektrodenabschnitt (24) aus einem nicht leitenden Material in einem Bereich angeordnet ist, der auf das Werkstück (8) ausrichtbar ist, und daß dem Werkstück (8) oder der Elektrode (2, 20) eine Fördereinrichtung (3) zugeordnet ist, mittels der das Werkstück (8) relativ zur Elektrode (2, 20) oder umgekehrt bewegbar ist, wobei der erste Elektrodenabschnitt (21) einen halbkugelförmig ausgebildeten Endabschnitt (23) umfaßt und der Spalt (25) zur Mitte des halbkugelförmigen Endabschnittes (23) ausgerichtet ist und eine Spaltbreite von etwa 20 - 50 µm und eine Spalthöhe von etwa 0,5 mm - 1 mm besitzt.

11. Vorrichtung nach Anspruch 10, dadurch gekennzeichnet, daß die Spaltelektrode (2, 20) eine zwischen dem ersten Elektrodenabschnitt (21) und dem Spalt (25) angeordnete Schicht eines komprimierbaren Materials aufweist.

12. Vorrichtung nach Anspruch 10 oder 11, dadurch gekennzeichnet, daß die Zuführeinrichtung (27) für den Elektrolyt aus mindestens einer, sich durch den ersten Elektrodenabschitt (21) erstreckenden Bohrung besteht.

13. Vorrichtung nach einem der Ansprüche 10 bis 12, dadurch gekennzeichnet, daß dem Spalt (25) eine Absaugeinrichtung zur Abführung von bei der elektrochemischen Bearbeitung der Werkstücke entstehenden Gasen zugeordnet ist.

14. Vorrichtung nach einem der Ansprüche 10 bis 13, dadurch gekennzeichnet, daß der erste Festspannungsregelkreis die Spannung bis 100 V und der zweite Festspannungsregelkreis die Spannung bis 15 V regelt.

15. Vorrichtung zur Durchführung des Verfahrens nach einem der Ansprüche 1 bis 9 mit einer Spannungsquelle, die über eine elektrische Schaltung mit mindestens einem ersten Festspannungsregelkreis und einem zweiten Festspannungsregelkreis, denen jeweils eine Strombegrenzungsschaltung zugeordnet ist, und einem Zeitschaltkreis mit der Elektrode (6', 31) und dem Werkstück (1') verbunden ist, und einem zwischen der Elektrode (6', 31) und dem Werkstück (1') angeordneten Elektrolyt, dadurch gekennzeichnet, daß die Elektrode als Flächenelektrode mit einem elektrisch leitenden plattenförmigen Elektrodenelement (6') ausgebildet ist und daß das Elektrodenelement (6') oder ein zwischen dem Elektrodenelement (6') und der Werkstücksoberfläche angeordnetes Diaphragma (8') eine an die zu behandelnde Werkstücksfläche angepaßte Elektrolytaustrittsfläche aufweist, die mit einem Muster von schlitzförmigen bzw. punktförmigen Elektrolytaustrittsöffnungen versehen ist.

16. Vorrichtung nach Anspruch 15, dadurch gekennzeichnet, daß sie eine vollzylindrisch, hohlzylindrisch oder konisch ausgebildete Elektrode (31) aufweist, auf deren innerer bzw äußerer Mantelfläche die Elektrolytaustrittsöffnungen angeordnet sind.

17. Vorrichtung nach Anspruch 15 oder 16, dadurch gekennzeichnet, daß die Elektrolytaustrittsfläche der Elektrode bzw. des Diaphragmas mit einem Poliertuch überspannt ist.

18. Vorrichtung nach einem der Ansprüche 15 bis 17 zur Behandlung von rotationssymmetrischen Körpern, dadurch gekennzeichnet, daß sie ein einen abgeschlossenen Hohlraum aufweisendes Elektrodenelement (32) besitzt, in dem ein Hohlkörper (33) angeordnet ist, durch dessen Innenraum ein zu behandelnder Gegenstand führbar ist, wobei dieser Innenraum über eine Vielzahl von Elektrolytdurchtrittsöffnungen (35) mit dem eine Elektrolytkammer bildenden Elektrodenhohlraum in Verbindung steht.

## Claims

1. A process for the electrochemical processing of workpieces (8, 1'), especially for the electroplating, sharpening or oxidizing of the same, according to which an electrolyte is located between an edge or surface to be treated of the workpiece (8, 1') and an electrode (2, 20, 6', 31) and an electric current is allowed to flow between the edge or surface and the electrode, characterized by directing a uniform adjustable liquid stream of the electrolyte emanating from the electrode (2, 20, 6', 31) punctually, linearly or two-dimensionally on the edge or surface to be treated of the workpiece (8, 1').

2. The process according to claim 1, characterized by moving the edge or surface of the workpiece (8, 1') and the electrode (2, 20, 6', 31) relative to one another.

3. The process according to claim 2, characterized by moving the electrode (2, 20) in a constant distance with respect to the edge or surface to be treated of the workpiece (8).

4. The process according to one of the preceding claims for the manufacture of structured workpiece surfaces, characterized by allowing the liquid stream of the electrolyte to act upon the surface of the workpiece punctually, linearly or two-dimensionally according to a certain pattern.

5. The process according to one of the preceding claims, characterized by directing the liquid stream of the electrolyte perpendicularly and/or parallelly to the surface of the workpiece.

6. The process according to one of the preceding claims, characterized by alternately generating a high current density of 0.01 A/cm² to 250 A/cm² and a low current density of 0.01 A/cm² to 50 A/cm² at the electrode, wherein one selects as low current density such a current density which corresponds to about 5 to 20 % of the high current density.

7. The process according to claim 5 or 6, characterized by applying the high and low current density for a period of time between 0.1 µ sec and 100 min.

8. The process according to one of the preceding claims, characterized by locating a layer of a non-conductive material between the workpiece (1') and the electrode (6'), supplying the electrolyte through an opening provided in the layer, and bringing the electrode (6') in contact with the layer and bringing the layer in contact with the workpiece (1').

9. The process according to one of the preceding claims, characterized by selectively applying a direct current, an alternating current or an impulse current and/or combinations thereof to the electrode (2, 20, 6', 31).

10. An apparatus for carrying out the process according to one of the preceding claims, said apparatus comprising a source of electric potential (100, 101, 102) which is connected to a first fixed-voltage control circuit and a second fixed-voltage control circuit by means of an electrical circuit, the first and second fixed-voltage control circuits being each associated with a current limiting circuit (106), and which is connected to the electrode (2, 20) and to the workpiece (8) by means of a timing circuit, and an electrolyte located between the electrode (2, 20) and the workpiece (8), characterized in that the electrode (2, 20) is formed as gap electrode having at least one supply means (27) for the electrolyte from a first electrically conducting electrode portion (21) connected to the current source to a gap (25) located in a second electrode portion (24) of non-conducting material and encompassing the first electrode portion at least partly in a region that is adapted to be oriented to the workpiece (8), and in that the workpiece (8) or the electrode (2, 20) is associated with conveying means (3) by means of which the workpiece (8) is movable relative to the electrode (2, 20) or vice versa, wherein the first electrode portion (21) has an endregion (23) having the shape of a semi-sphere and the gap (25) is aligned to the centre of the semi-spherical endregion (22) and has a gapwidth of about 20 - 50 µm and a gapheight of about 0.5 - 1 mm.

11. The apparatus according to claim 10, characterized in that the gap electrode (2, 20) has a layer of compressible material located between the first electrode portion (21) and the gap (25).

12. The apparatus according to claim 10 or 11, characterized in that the supply means (27) for the electrolyte consists of at least one bore extending through the first electrode portion (21).

13. The apparatus according to one of the claims 10 to 12, characterized in that the gap (25) is associated with suction means for discharging gases which are generated during the electrochemical processing of the workpieces.

14. The process according to one of the claims 10 to 13, characterized in that the first fixed-voltage control circuit controls the voltage up to 100 V and the second fixed-voltage control circuit controls the voltage up to 15 V.

15. An apparatus for carrying out the process according to one of the claims 1 to 9, said apparatus comprising a source of potential which is connected to at least one first fixed-voltage control circuit and to a second fixed-voltage control circuit by means of an electric circuit, the first and second fixed-voltage control circuits having associated therewith a current limiting circuit, respectively, and which is connected to the electrode (6', 31) and the workpiece (1') by means of a timing circuit, and an electrolyte located between the electrode (6', 31) and the workpiece (1'), characterized in that the electrode is formed as two-dimensional electrode having an electrically conducting plate-like electrode member (6'), and in that the electrode member (6') or a diaphragm (8') located between the electrode member (6') and the workpiece surface has an electrolyte discharge surface adapted to the workpiece surface which is to be treated, said electrolyte discharge surface being provided with a pattern of slot-like or point-like electrolyte discharge openings.

16. The apparatus according to claim 15, characterized in that it includes an electrode (31) which is formed as full cylinder, hollow cylinder or conical and having on its inner or outer jacket surface the electrolyte discharge openings.

17. The process according to claim 15 or 16, characterized in that the electrolyte discharge surface of the electrode or of the diaphragm is stretched with a polishing cloth.

18. The apparatus according to one of the claims 15 to 17 for the processing of objects which are rotational-symmetric, characterized in that it comprises an electrode member (32) having a closed cavity in which a hollow member (33) is located, through the interior of which an object to be processed can be directed, wherein this interior is connected to the electrode cavity forming an electrolyte chamber by means of a plurality of electrolyte passages (35).

## Revendications

1. Procédé de traitement électrochimique de pièces (8, 1') et en particulier de galvanisation, de gravure ou d'oxydation de celles-ci, dans lequel on dispose un électrolyte entre un chant ou une surface à travailler de la pièce (8, 1') et une électrode (2, 20, 6', 31) et on fait passer un courant électrique entre le chant ou la surface et l'électrode, caractérisé en ce que l'on dirige un courant régulier et réglable de liquide d'électrolyte partant de l'électrode (2, 20, 6', 31) de manière ponctuelle, linéaire ou superficielle sur le chant ou la surface à traiter de la pièce (8, 1').

2. Procédé selon la revendication 1, caractérisé en ce que l'on déplace l'un par rapport à l'autre le chant ou la surface de la pièce (8, 1') et l'électrode (2, 20) 6', 31).

3. Procédé selon la revendication 2, caractérisé en ce que l'on déplace l'électrode (2, 20) à une distance constante du chant ou de la surface à traiter de la pièce (8).

4. Procédé selon l'une des revendications précédentes, pour la fabrication de surfaces structurées de pièce, caractérisé en ce que l'on fait agir le courant de liquide d'électrolyte de manière ponctuelle, linéaire ou superficielle, suivant un schéma déterminé, sur la surface de la pièce.

5. Procédé selon l'une des revendications précédentes, caractérisé en ce que le courant de liquide de l'électrolyte est dirigé perpendiculairement sur la surface de la pièce ou parallèlement à celle-ci.

6. Procédé selon l'une des revendications précédentes, caractérisé en ce que l'on crée en alternance une densité élevée de courant, de 0,01 A/cm² à 250 A/cm² et une faible densité de courant, de 0,01 A/cm² à 50 A/cm² sur l'électrode, en choisissant comme faible densité de courant une densité de courant qui corresponde à environ 5-20 % de la densité élevée de courant.

7. Procédé selon la revendication 5 ou 6, caractérisé en ce que l'on établit l'alternance de la densité élevée et de la faible densité du courant sur une période située entre 0,1 µsec et 100 min.

8. Procédé selon l'une des revendications précédentes, caractérisé en ce qu'entre la pièce (1') et l'électrode (6') on installe une couche de matériau non conducteur, que l'on amène l'électrolyte à travers une ouverture prévue dans la couche et que l'on met l'électrode (6') en contact avec la couche et celle-ci en contact avec la pièce (1').

9. Procédé selon l'une des revendications précédentes, caractérisé en ce que l'on établit au choix une tension continue, alternative ou pulsée et/ou leur combinaison sur l'électrode (2, 20, 6', 31).

10. Dispositif en vue de l'exécution du procédé selon l'une des revendications précédentes, avec une source de tension (100, 102, 102) qui est reliée à l'électrode (2, 20) et à la pièce (8) par un circuit électrique comprenant au moins un premier circuit de régulation de la tension fixe et un second circuit de régulation de la tension fixe auxquels un circuit limiteur de courant (106) est toujours associé, et par un circuit de commutation temporisée, ainsi qu'avec un électrolyte disposé entre l'électrode (2, 20) et la pièce (8), caractérisé en ce que l'électrode (2, 20) se présente sous la forme d'une électrode à fente qui comprend au moins un dispositif d'amenée (27) de l'électrolyte à une fente (25), l'électrolyte provenant d'une première partie (21) de l'électrode, électriquement conductrice et reliée à la source de tension, la fente (25) étant disposée dans une seconde partie (24) d'électrode, constitué d'un matériau non conducteur et entourant au moins partiellement la première partie de l'électrode, dans une zone pouvant être dirigée sur la pièce (8), et en se qu'un dispositif de transport (3) est associé à la pièce (8) ou à l'électrode (2, 20), au moyen duquel la pièce (8) peut être déplacée par rapport à l'électrode (2, 20) ou inversement, la première partie (21) de l'électrode comprenant une partie d'extrémité (23) de forme hémisphérique, la fente (25) étant orientée vers le milieu de la partie (23) d'extrémité de forme hémisphérique et possédant une largeur de fente d'environ 20-50 µm et une hauteur de fente d'environ 0,5 mm - 1 mm.

11. Dispositif selon la revendication 10, caractérisé en ce que l'électrode à fente (2, 20) présente une couche d'un matériau compressible disposée entre la première partie (21) de l'électrode et la fente (25).

12. Dispositif selon la revendication 10 ou 11, caractérisé en ce que le dispositif d'amenée (27) d'électrolyte est constitué d'au moins un alésage traversant la première partie (21) de l'électrode.

13. Dispositif selon l'une des revendications 10 à 12, caractérisé en ce qu'à la fente (25) est associé un dispositif d'aspiration destiné à extraire les gaz apparaissant lors du traitement électrochimique de la pièce.

14. Dispositif selon l'une des revendications 10 à 13, caractérisé en ce que le premier circuit de régulation de la tension fixe régule la tension à partir de 100 V et que le second circuit de régulation de la tension fixe régule la tension à partir de 15 V.

15. Dispositif en vue de l'exécution du procédé selon l'une des revendications 1 à 9, avec une source de tension qui est reliée à l'électrode (6', 31) et à la pièce (1') par un circuit électrique comprenant au moins un premier circuit de régulation de la tension fixe et un second circuit de régulation de la tension fixe auxquels un circuit limiteur de courant est toujours associé, et avec un circuit de commutation temporisée, ainsi qu'avec un électrolyte disposé entre l'électrode (6', 31) et la pièce (1'), caractérisé en ce que l'électrode se présente sous la forme d'une électrode plate avec un élément (6') d'électrode électriquement conducteur en forme de plaque, et en ce que l'élément (6') d'électrode ou un diaphragme (8') disposé entre l'élément (6') d'électrode et la surface de la pièce présente une surface de sortie d'électrolyte adaptée à la surface de la pièce à traiter, cette surface de sortie étant dotée d'ouvertures de sortie d'électrolyte en forme de fente ou de forme ponctuelle suivant un schéma.

16. Dispositif selon la revendication 15, caractérisé en ce qu'il présente une électrode se présentant sous la forme d'un cylindre plein, d'un cylindre creux ou d'un cône à la surface d'enveloppes intérieure ou extérieure desquelles sont disposées les ouvertures de sortie d'électrolyte.

17. Dispositif selon la revendication 15 ou 16, caractérisé en ce que la surface de sortie d'électrolyte de l'électrode ou du diaphragme est recouverte d'un chiffon de polissage.

18. Dispositif selon l'une des revendications 15 à 17, destiné au traitement de corps à symétrie de rotation, caractérisé en ce qu'il possède un élément (32) d'électrode présentant une enceinte creuse fermée dans laquelle est installé un élément creux (33), un objet à traiter pouvant être inséré à travers l'enceinte intérieure de ce corps creux (33), et cette enceinte intérieure étant en liaison par l'intermédiaire d'un grand nombre d'ouvertures (35) de passage d'électrolyte avec l'enceinte creuse de l'électrode, formant une chambre d'électrolyte.
